# EUROPÄISCHE PATENTANMELDUNG

(11) **EP 3 261 010 A1**
(43) Veröffentlichungstag der Anmeldung: **27.12.2017**
(21) Anmeldenummer: 17001007.8
(22) Anmeldetag: 14.06.2017
(51) Int. Cl.: G06F 21/31

(54) **ZUSTANDSLOSES SICHERHEITSELEMENT**

(30) Priorität: 23.06.2016 DE 102016007690
(71) Anmelder: Giesecke+Devrient Mobile Security GmbH, 81677 München (DE)
(72) Erfinder: MARTINI, Ullrich, 81667 München (DE)

(57) **Zusammenfassung**

Die vorliegende Erfindung ist gerichtet auf ein zustandsloses Sicherheitselement mitsamt einer Verifikationsanordnung, aufweisend das zustandslose Sicherheitselement. Mittels des vorgeschlagenen Sicherheitselements ist es möglich, herkömmliche Sicherheitselemente derart zu verbessern, dass diese kostengünstiger, also mit weniger technischem Aufwand hergestellt werden können, als auch energieeffizienter betrieben werden können.

## Beschreibung

Die vorliegende Erfindung ist gerichtet auf ein zustandsloses Sicherheitselement mitsamt einer Verifikationsanordnung, aufweisend das zustandslose Sicherheitselement. Mittels des vorgeschlagenen Sicherheitselements ist es möglich, herkömmliche Sicherheitselemente derart zu verbessern, dass diese kostengünstiger, also mit weniger technischem Aufwand hergestellt werden können, als auch energieeffizienter betrieben werden können. Besonders vorteilhaft ist hierbei, dass dennoch die Sicherheit der abgespeicherten Daten zu jedem Zeitpunkt gewährleistet ist. Die vorliegende Erfindung ist ferner gerichtet auf ein Verfahren zum Betreiben des zustandslosen Sicherheitselements sowie auf ein Computerprogrammprodukt mit Steuerbefehlen, welche das vorgeschlagene Verfahren implementieren.

Die EP 2 524 333 B1 zeigt ein Verfahren zum Bereitstellen eines sicheren Zählers auf einem Endgerät. Gemäß dieser Druckschrift erfolgt ein Abspeichern einer Variablen auf einem externen, gekapselten Sicherheitselement. Hierbei wird jedoch nicht eine Hardwareausgestaltung vorgeschlagen, die eine Speichereffizienz berücksichtigt. Vielmehr ist hierbei vorgesehen, dass Variable in Datenspeichern des Sicherheitselements abgespeichert werden.

Als ein Sicherheitsmechanismus sind gesicherte Zähler bekannt, welche Falschangaben von Sicherheitsmerkmalen mitzählen und somit begrenzen. So ist es bekannt, Zugriff auf sensible Daten oder Dienste erst nach einer positiven Verifikation der Nutzerdaten zu erlangen. Hierzu ist eine PIN, beziehungsweise ein Passwort, vorgesehen, welches nicht beliebig oft eingegeben werden kann. Jedoch soll ein wahlloses Durchprobieren von Passwörtern, beziehungsweise PIN-Nummern, vermieden werden. Hierbei wird eine Obergrenze definiert, die die maximale Anzahl von Falscheingaben definiert, worauf der Autorisierungsvorgang abgebrochen wird. Sichere Zähler werden in einer Vielzahl von Anwendungen benötigt.

Ferner bekannt sind sichere Zähler bei der Ausführung von Transaktionen, um Fehlversuche bei der Eingabe eines Identifikationsdatums festzustellen. Der Zähler stellt hierbei einen sogenannten Fehlerbedienungszähler dar. Insbesondere bei sicherheitskritischen Daten und Prozessen muss in jedem Falle sichergestellt werden können, dass der Zähler nicht manipuliert werden kann. Zur Erhöhung der Sicherheit von Applikationen in einem Endgerät sind Endgeräte bekannt, welche eine normale Ausführungsumgebung und eine gesicherte Ausführungsumgebung aufweisen.

Ein entsprechendes Endgerät zeigt die WO 2004/046934 A2. Das dort beschriebene Endgerät umfasst weiterhin einen Schnittstellencontroller, welcher den Zugang zu den von einem Sicherheitselement angebotenen Diensten absichert.

Die Realisierung eines sicheren Zählers in dem gesicherten Bereich des Endgeräts ist jedoch problematisch. Ein Zähler kann immer wieder durch das Einspielen eines früheren beziehungsweise älteren Speicherabbilds des gesicherten Bereichs mit einem alten Wert überschrieben werden. Dies ist auch als ein sogenannter Rollbackangriff bekannt.

Alternativ ist es gemäß herkömmlichen Verfahren bekannt, einen internen Datenspeicher des Sicherheitselements, welcher besonders mittels physischer und logischer Verfahren abgesichert ist, zu verwenden. Diese internen Datenspeicher sind jedoch aufwändig in der Herstellung und somit kostenintensiv.

Somit ist es eine Aufgabe der vorliegenden Erfindung, ein sicheres Verfahren zum Abspeichern und zum energieeffizienten Betreiben des Abspeicherns von Steuerbefehlen bereitzustellen. Gemäß dem vorgeschlagenen Verfahren soll es bewerkstelligt werden, dass kostengünstige Sicherheitselemente beispielsweise bei einem Anwendungsszenario, welches eine PIN-Verifikation umfasst, Verwendung finden können. Hierbei bezieht sich die Kosteneffizienz nicht lediglich auf das Bereitstellen der Hardwarekomponenten an sich, sondern eben auch auf das Betreiben der jeweiligen Hardwarekomponenten. Es ist ferner eine Aufgabe der vorliegenden Erfindung, ein entsprechend eingerichtetes Verfahren zum Betreiben des zustandslosen Sicherheitselements bereitzustellen mitsamt einer Verifikationsanordnung. Ferner ist es eine Aufgabe, ein Computerprogrammprodukt bereitzustellen, welches entsprechend zum Betreiben des Sicherheitselements, der Verifikationsordnung und zur Ausführung des vorgeschlagenen Verfahrens eingerichtet ist.

Die Aufgabe wird gelöst mit den Merkmalen des unabhängigen Patentanspruchs 1. Weitere vorteilhafte Ausgestaltungen sind in den Unteransprüchen angegeben.

Demgemäß wird ein zustandsloses Sicherheitselement zur PIN-Verifikation vorgeschlagen. Das Sicherheitsmerkmal weist einen internen Datenspeicher auf, der Steuerbefehle und Steuerparameter abspeichert. Ferner ist eine Kommunikationsschnittstelle vorgesehen, welche eingerichtet ist zur Übermittlung von Steuerparametern an einen externen Datenspeicher. Schreibender Zugriff auf Steuerparameter durch das Sicherheitselement ist hierbei ausschließlich mittels der Kommunikationsschnittstelle durchführbar.

Als ein Sicherheitselement wird ein Element verstanden, welches sowohl hardwaretechnisch als auch logisch besonders zugriffsgeschützt ist. Hierbei kann es sich zum Beispiel um eine Secure-Micro-SD-Karte, eine SIM-Karte, eine UICC oder generell einen Hardware-Chip handeln. Unter dem Begriff Sicherheitselement wird insbesondere eine Smart Card beziehungsweise ein Smartcard-Chip oder ein intelligenter Mikroprozessor verstanden. Generell entspricht ein Sicherheitselement gemäß einem Aspekt der vorliegenden Erfindung einem "Secure-Element", wie es beispielsweise die ETSI (European Telecommunications Standard Institute) definiert. Gemäß einem weiteren Aspekt der vorliegenden Erfindung ist ein Sicherheitselement ein besonders gesicherter Speicher beziehungsweise ein gesicherter Speicher und optional eine Laufzeitumgebung zum Abspeichern sensitiver Daten und deren Verarbeitung. Hierzu können sowohl physikalische als auch logische Sicherungen vorgesehen sein, um Datenintegrität und Vertraulichkeit der Daten zu gewährleisten. Während typischerweise Sicherheitselemente beschreibbare flüchtige Speicher aufweisen, so ist es ein Aspekt der vorliegenden Erfindung, dass lediglich lesbare Speicher in dem Sicherheitselement verbaut werden.

Das vorgeschlagene Sicherheitselement ist gemäß einem Aspekt der vorliegenden Erfindung zustandslos, da keinerlei Parameter in dem internen Datenspeicher ablegbar sind. Diese Steuerparameter des internen Datenspeichers sind dort beispielsweise zur Herstellung des Sicherheitselements hinterlegt worden und werden bei der Verwendung des Sicherheitselements nicht weiter beschrieben. Hierbei handelt es sich beispielsweise um Systemparameter und entsprechende Steuerbefehle, welche ein Funktionieren des Sicherheitselements gewährleisten. Somit operiert das Sicherheitselement, ohne dass Steuerparameter beziehungsweise Steuerparameterwerte geschrieben werden. Sind zu einem Ausführen von Steuerbefehlen Schreiboperationen notwendig, so werden diese stets extern abgespeichert. Dadurch, dass keine Programmabläufe Steuerparameter schreiben, handelt es sich um ein zustandsloses Sicherheitselement, welches nur dadurch zustandsbehaftet werden kann, dass ein externer Datenspeicher herangezogen wird.

Dies hat insbesondere den Vorteil, dass bzgl. des technisch aufwändig bereitzustellenden internen Datenspeichers derart eine Kostenersparnis erzielt werden kann, dass dieser interne Datenspeicher lediglich lesbar ausgestaltet ist. Somit verfügt das Sicherheitselement im Generellen über einen Datenspeicher, auf diesen kann jedoch nicht schreibend zugegriffen werden.

Das vorgeschlagene Verfahren beziehungsweise das vorgeschlagene Sicherheitselement dient gemäß einem Aspekt der vorliegenden Erfindung zur PIN-Verifikation. Dies ist insbesondere deshalb vorteilhaft, da das Sicherheitselement kostengünstig ausgestaltet werden kann und energieeffizient betrieben werden kann und dennoch beispielsweise ein Versuchszähler einer PIN-Verifikation extern betrieben werden kann. Somit ist es also erfindungsgemäß möglich, herkömmliche Verfahren zu implementieren und dabei stets auf ein kosteneffizientes Sicherheitselement zurückzugreifen. Im Allgemeinen besitzt das vorgeschlagene zustandslose Sicherheitselement lediglich die Eignung zur PIN-Verifikation, wobei auch andere vorteilhafte Anwendungsszenarien implementierbar sind.

Ein interner Datenspeicher zeichnet sich im Gegensatz zu dem externen Datenspeicher dadurch aus, dass dieser zum Beispiel physisch auf dem Sicherheitselement integriert ist. Somit ist es möglich, das Sicherheitselement mitsamt dem internen Datenspeicher einstückig bereitzustellen. Somit sind das Sicherheitselement und der interne Datenspeicher strukturell jeweils mittels physischer Bauelemente miteinander gekoppelt. Ein externer Datenspeicher ist im Gegensatz hierzu nicht mit dem Sicherheitselement einstückig ausgeformt, sondern wird lediglich mittels einer Kommunikationsschnittstelle kommunikativ an das Sicherheitselement gekoppelt. Auch kann ein externer Datenspeicher derart bereitgestellt werden, dass beispielsweise das Sicherheitselement und der externe Datenspeicher mittels einer drahtlosen Kommunikationsverbindung miteinander kommunizieren. Auch kann der externe Datenspeicher derart entfernt angeordnet werden, dass dieser lediglich über ein Kommunikationsnetzwerk, beispielsweise das Internet, ansprechbar ist.

Das Sicherheitselement greift im Generellen gemäß einem Aspekt der vorliegenden Erfindung auf zwei Arten von Steuerparametern zurück. Einmal sind dies Steuerparameter, welche dem internen Datenspeicher zu entnehmen sind, welche bereitstellen, dass Programmabläufe, also eine Funktionalität des Sicherheitselements bereitgestellt werden kann. Externe Steuerparameter, also diejenigen Steuerparameter, die auf dem externen Datenspeicher abgespeichert sind, speichern Laufzeitvariablen und insbesondere Zwischenergebnisse ab. Der Wortlaut ist dahingehend zu verstehen, dass unter Steuerparameter auch typischerweise die Steuerparameterwerte verstanden werden. Somit ist die vorliegende Erfindung also nicht beschränkt auf lediglich Steuerparameter an sich, sondern auch die entsprechenden Belegungen, Datentypen und dergleichen sollen erfindungsgemäß abgedeckt werden. So ist es typischerweise bei einem Ablauf von Steuerbefehlen nicht immer notwendig, den Steuerparameter an sich neu zu definieren, sondern vielmehr werden oftmals nur Steuerparameterwerte angepasst. Wird beispielsweise ein Zähler inkrementiert, so kann der Steuerparametertyp unverändert bleiben, während lediglich der Steuerparameterwert heraufgezählt wird.

Dadurch, dass das Sicherheitselement ausschließlich mittels der Kommunikationsschnittstelle Steuerparameter schreibt, wird also strukturell verhindert, dass das Sicherheitselement den internen Datenspeicher beschreibt.

Dies kann insbesondere dadurch implementiert werden, dass der interne Datenspeicher nicht zum Beschreiben geeignet ist. Vielmehr ist es ein Aspekt der vorliegenden Erfindung, dass das Sicherheitselement keinen beschreibbaren Datenspeicher aufweist, sondern stets zum Schreiben der Steuerparameter auf den externen Datenspeicher zugreift.

Gemäß einem weiteren Aspekt der vorliegenden Erfindung ist eine PIN-Verifikation derart ermöglicht, dass lediglich die PIN-Verifikation mittels schreibenden Zugriffs auf die extern abgespeicherten Steuerparameter durchgeführt wird. Somit kann das zustandslose Sicherheitselement weitere Datenspeicher aufweisen beziehungsweise auf weitere Datenspeicher Zugriff haben, ohne dass die PIN-Verifikation mittels dieser weiteren beschreibbaren Datenspeicher durchgeführt wird. Somit kann also auch eine PIN-Verifikation in einem hart kodierten Bereich eines Datenspeichers bezüglich ihrer Steuerbefehle abgelegt werden. Die Laufzeitparameter, insbesondere die Zähler, werden dann auf einem externen Datenspeicher abgespeichert. Weitere Anwendungen, also Steuerbefehle, können dennoch auf einen weiteren Datenspeicher zurückgreifen und für andere Anwendungen auf einen weiteren internen schreibbaren Datenspeicher zurückgreifen.

Gemäß einem Aspekt der vorliegenden Erfindung ist der interne Datenspeicher nur lesbar. Dies hat den Vorteil, dass ein besonders kostengünstiger Speicher vorgehalten wird, der nicht manipulierbar ist. Insbesondere kann ein teurerer, schreibbarer Datenspeicher bei einer Herstellung eines Sicherheitselements vermieden werden. Insbesondere wird bei dem erfindungsgemäßen Sicherheitselement auch ein energieeffizientes Verfahren eingesetzt, da keine internen Datenspeicher beschrieben werden. Dies ist insbesondere dann vorteilhaft, wenn das Sicherheitselement über lediglich beschränkte Energiespeichermöglichkeiten verfügt, wohingegen auf der Seite des weiteren Kommunikationspartners entsprechende Energiespeicher vorgehalten werden. Somit kann der Energieverbrauch weg von dem Sicherheitselement hin zu dem externen Datenspeicher ausgelagert werden.

Gemäß einem weiteren Aspekt der vorliegenden Erfindung definieren die Steuerbefehle einen Programmablauf, dessen Parameter stets auf dem externen Datenspeicher abgespeichert werden. Dies hat den Vorteil, dass der interne Datenspeicher, welcher nur lesbar ausgestaltet ist, lediglich diejenigen Steuerbefehle und Steuerparameter abspeichert, welche zum Bereitstellen einer Funktion des Sicherheitselements dienen. Weitere Laufzeitparameter werden dann extern abgespeichert. Somit können Steuerbefehle ausgeführt werden, ohne dass das Sicherheitselement einen internen schreibbaren Datenspeicher vorhalten muss.

Gemäß einem weiteren Aspekt der vorliegenden Erfindung wird mittels der Steuerparameter ein Wiederholungszähler einer Sicherheitsabfrage auf dem externen Datenspeicher gespeichert. Dies hat den Vorteil, dass Laufparameter eines Wiederholungszählers sicher abgespeichert werden können und dass das Sicherheitselement über keinerlei Angriffsmöglichkeiten für eine Manipulation des Wiederholungszählers bietet. Bei einem Wiederholungszähler handelt es sich um eine besonders sicherheitskritische Information, welche stets bei mehreren Fehlversuchen einer Autorisierung zurückgesetzt werden kann. Erfindungsgemäß wird die Angriffsmöglichkeit auf das Sicherheitselement und insbesondere auf den Wiederholungszähler reduziert. Somit kann eine besonders sicherheitskritische PIN-Verifikation implementiert werden, ohne dass der Wiederholungszähler auf dem Sicherheitselement an sich abgespeichert wird.

Gemäß einem weiteren Aspekt der vorliegenden Erfindung sind auf dem internen Datenspeicher Steuerparameter gespeichert, die statisch sind. Ferner sind Steuerparameter, welche auf dem externen Datenspeicher gespeichert sind, variabel. Dies hat den Vorteil, dass die Funktionslogik des Sicherheitselements hart kodiert auf dem Datenspeicher hinterlegt werden kann, während Laufzeitparameter extern variabel abgespeichert werden können. Somit nehmen die Steuerparameter beziehungsweise die Steuerparametertypen Rücksicht auf die strukturelle Ausgestaltung der Datenspeicher.

Gemäß einem weiteren Aspekt der vorliegenden Erfindung sind der interne und/ oder der externe Datenspeicher ein nicht-flüchtiger Datenspeicher. Dies hat den Vorteil, dass bestehende Datenspeicher Wiederverwendung finden können, und insbesondere, dass bestehende Sicherheitselemente in besonders einfacher technischer Art und Weise erfindungsgemäß angepasst werden können. So sind bekannte Hardwarearchitekturen beziehungsweise Verfahren im Wesentlichen erfindungsgemäß weiter verwendbar, wobei lediglich das Sicherheitselement derart angepasst werden muss, dass eben kein interner Datenspeicher zum Schreiben von Steuerparametern verwendet wird, sondern ein externer Datenspeicher.

Gemäß einem weiteren Aspekt der vorliegenden Erfindung sind abgespeicherte Steuerbefehle in Abhängigkeit mindestens eines Steuerparameters ausführbar. Dies hat den Vorteil, dass eine Funktionslogik auf dem internen Datenspeicher implementiert werden kann und Bedingungen, wie zum Beispiel Zähler, extern abgespeichert werden können. So kann beispielsweise bei einem Erreichen einer Obergrenze eines Wiederholungszählers ein gewisser Steuerbefehl auf dem Sicherheitselement nicht mehr ausgeführt werden. Somit ist es erfindungsgemäß möglich, keinen Zugriff auf sensible Daten oder Dienste zu gewähren, für den Fall, dass eine bestimmte Belegung eines Steuerparameters vorhanden ist.

Gemäß einem weiteren Aspekt der vorliegenden Erfindung kommuniziert das Sicherheitselement mittels einer Datenverbindung mit dem externen Datenspeicher. Dies hat den Vorteil, dass der externe Datenspeicher und das Sicherheitselement jeweils entfernt angeordnet werden können. Insbesondere können weitere bekannte Netzwerkkomponenten Verwendung finden, um das Sicherheitselement kommunikativ mit dem externen Datenspeicher zu koppeln.

Gemäß einem weiteren Aspekt der vorliegenden Erfindung liegt der externe Datenspeicher als ein herkömmliches Sicherheitselement vor. Dies hat den Vorteil, dass beispielsweise in einem weiteren Gerät, welches ein Sicherheitselement aufweist, entsprechende Laufparameter abgespeichert werden können. Hierbei kann es sich beispielsweise um eine SIM-Karte in einem verbundenen Gerät handeln. Somit implementiert das zustandslose Sicherheitselement die Steuerbefehle und greift zur Abspeicherung der Steuerparameter beziehungsweise Steuerparameterwerte auf ein extern angebundenes Gerät zurück.

Gemäß einem weiteren Aspekt der vorliegenden Erfindung liegt das Sicherheitselement als eine SIM-Karte, eine Secure-SD-Karte, eine UICC und/ oder ein Hardware-Chip vor. Dies hat den Vorteil, dass bestehende Hardwarekomponenten erfindungsgemäß lediglich leicht angepasst werden können und gemäß dem vorgeschlagenen Verfahren beziehungsweise dem vorgeschlagenen Sicherheitselement Wiederverwendung finden können. Insbesondere lässt sich somit das vorgeschlagene Sicherheitselement in bereits bestehende Architekturen integrieren und stellt lediglich eine erweiterte Sicherheitsfunktionalität bereit. Ferner ist es möglich, bestehende Sicherheitselemente derart erfindungsgemäß anzupassen, dass sie mit geringem technischem Aufwand hergestellt werden können und besonders energieeffizient betrieben werden können.

Gemäß einem weiteren Aspekt der vorliegenden Erfindung ist auf dem internen Datenspeicher ein Protokoll zur Kommunikation mit dem externen Datenspeicher abgespeichert. Dies hat den Vorteil, dass das Sicherheitselement Steueranweisungen beziehungsweise Steuerbefehle bereithält, welche es ihm ermöglichen, mit dem externen Datenspeicher zu kommunizieren und insbesondere hierbei Steuerparameter zu schreiben. Das Protokoll kann auch vorsehen, dass weitere Zwischeneinheiten zwischengeschaltet sind, welche beispielsweise ein Netzwerk aufspannen. Somit wird sichergestellt, dass beispielsweise mit einem gemäß der vorliegenden Erfindung besonders gesichertem Protokoll eine vertrauliche Datenverbindung zwischen dem Sicherheitselement und dem externen Datenspeicher möglich ist. Besonders vorteilhaft ist es, dass der externe Datenspeicher direkt oder mittels weiterer Komponenten ebenfalls ein entsprechendes Übertragungsprotokoll implementiert, welches gewährleistet, dass Steuerbefehle beziehungsweise Steuerparameter auf dem externen Datenspeicher abgespeichert werden können.

Insbesondere ist es vorteilhaft, dass das Protokoll vorsieht, dass das Sicherheitselement auch lesenden Zugriff auf den externen Datenspeicher hat. Somit ist es erfindungsgemäß möglich, nicht nur Steuerparameter auf dem externen Datenspeicher aufzuschreiben, sondern vielmehr auch diese wieder auszulesen und dem laufenden Programmablauf zugänglich zu machen.

Gemäß einem weiteren Aspekt der vorliegenden Erfindung ist ausschließlich das zustandslose Sicherheitselement eingerichtet, Benutzereingaben entgegenzunehmen. Somit ist es möglich, die Speicherung von sicheren Daten von Benutzereingaben zu entkoppeln. So erhält der Benutzer keinen Zugriff auf den externen Datenspeicher, welcher beispielsweise Wiederholungszähler abspeichert. So fragt der Benutzer beziehungsweise ein Programm stets bei dem Sicherheitselement an, ob eine weitere PIN beziehungsweise Passwort-eingabe möglich ist. Das Sicherheitselement fragt dann bei dem externen Datenspeicher den Wiederholungszähler an und entscheidet in Abhängigkeit des Wiederholungszählers, ob eine erneute PIN beziehungsweise Passwort-eingabe zulässig ist. Somit ist es dem Benutzer auch nicht möglich, den Wiederholungszähler zu manipulieren, da der Benutzer eben nur die Möglichkeit hat, auf das Sicherheitselement an sich zuzugreifen, ohne jedoch Zugriff auf den Speicherort des Wiederholungszählers zu bekommen.

Die Aufgabe wird ferner gelöst durch eine Verifikationsanordnung beziehungsweise durch eine Sicherheitselementanordnung gemäß einem weiteren Aspekt der vorliegenden Erfindung. Demgemäß wird eine Verifikationsanordnung vorgeschlagen, mit einem Sicherheitselement, aufweisend einen internen Datenspeicher, der Steuerbefehle und Steuerparameter abspeichert. Ferner sieht die Steueranordnung vor, einen dem Sicherheitselement extern angeordneten Datenspeicher bereitzustellen, auf dem Steuerparameter abgespeichert sind, wobei die Verifikationsanordnung lediglich einen schreibenden Zugriff auf Steuerparameter durch das Sicherheitselement und ausschließlich auf den externen Datenspeicher zulässt.

Ferner wird die Aufgabe gelöst durch ein Verfahren zum Betreiben eines zustandslosen Sicherheitselements zur PIN-Verifikation, wobei ein schreibender Zugriff auf Steuerparameter durch das Sicherheitselement ausschließlich mittels einer Kommunikationsschnittstelle zu einem externen Datenspeicher durchgeführt wird. Erfindungsgemäß wird die Aufgabe ebenfalls gelöst durch ein Computerprogrammprodukt, mit Steuerbefehlen, welche das Verfahren implementieren, beziehungsweise zum Betreiben des Sicherheitselements beziehungsweise der Verifikationsanordnung eingerichtet sind.

Es ist ferner ein Aspekt der vorliegenden Erfindung, dass die strukturellen Merkmale des Sicherheitselements beziehungsweise der Sicherheitsanordnung jeweils auch als Verfahrensschritte implementiert werden können. Andersherum können die jeweiligen Verfahrensschritte strukturell implementiert werden. Insbesondere ist das Verfahren geeignet zum Betreiben des zustandslosen Sicherheitselements sowie der Verifikationsanordnung.

Somit lassen sich alle Merkmale der physischen Anordnungen beziehungsweise Vorrichtungen auch mit den Verfahrensmerkmalen kombinieren. Das Verfahren sieht es hierbei auch vor, Verfahrensschritte bereitzustellen, welche die strukturellen Merkmale der Anordnung beziehungsweise des Sicherheitselements nachbilden.

Weitere vorteilhafte Ausgestaltungen sind in den Figuren angegeben. Diese beschreiben lediglich wesentliche Aspekte der vorliegenden Erfindung und sind beispielhaft auszulegen.

Es zeigt:
- Figur 1:: ein schematisches Blockschaltbild eines zustandslosen Sicherheitselements gemäß einem Aspekt der vorliegenden Erfindung; und
- Figur 2:: ein Ablaufhergang einer PIN-Verifikation gemäß einem Aspekt der vorliegenden Erfindung.

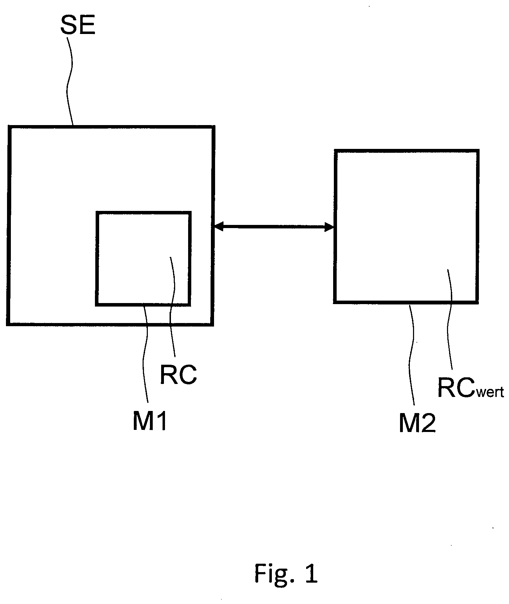

Figur 1 zeigt ein zustandsloses Sicherheitselement SE, welches einen internen Datenspeicher M1 aufweist. Im vorliegenden Beispiel weist der interne Datenspeicher M1 einen Steuerparameter auf, beispielsweise einen Retry Counter RC. Ein Retry Counter ist hierbei ein Wiederholungszähler, welcher angibt, wie oft eine PIN beziehungsweise ein Passwort fälschlicherweise eingegeben wurde. Hier ist lediglich der Steuerparameter hinterlegt, wobei bei einem Schreiben des Steuerparameterwerts stets auf den Datenspeicher M2 zugegriffen wird. Dieses Zugreifen beziehungsweise die Kommunikationsschnittstelle ist mittels des bidirektionalen Pfeils angedeutet. Dieser bidirektionale Pfeil deutet sowohl den schreibenden als auch den lesenden Zugriff des Sicherheitselements SE auf den Datenspeicher M2 an. Somit ist es erfindungsgemäß möglich, dass das Sicherheitselement SE lediglich den Read Only Speicher M1 bereitstellt. Alle Datenänderungen werden extern mittels des Speichers M2 durchgeführt.

Somit kann eine PIN-Verifikation auf einem Sicherheitselement SE implementiert werden, wobei das Sicherheitselement keinen Zugriff auf den eigenen nicht-flüchtigen Speicher hat oder zumindest keinen lesenden Zugriff auf den Speicher hat. Somit können Kosten und Energieverbrauch vermieden werden. Somit kann eine PIN-Verifikation nur durchgeführt werden, falls eine Anfrage an das vertrauenswürdige entfernte System, also der externe Speicher, ein entsprechendes Signal übersendet wurde, dass das Wiederholungslimit der Eingabe noch nicht überschritten ist.

Herkömmliche Embedded Secure Elements verwenden entweder externe nicht-flüchtige Speicher, welche Rollback-Angriffe ermöglichen, oder verwenden interne nicht-flüchtige Speicher, die teuer sind. Falls ein Retry Counter RC verwendet wird, also ein Zähler, der Versuche begrenzt, um eine PIN-oder Passwort-Eingabe einzugrenzen, muss dies gesichert werden. Erfindungsgemäß wird hierzu, um Kosten und Energie zu sparen, ein Retry Counter RC auf einem Sicherheitselement SE integriert, ohne Zugriff auf den eigenen nicht-flüchtigen Speicher. Das Sicherheitselement SE ist also ein sogenanntes zustandsloses Sicherheitselement SE.

Der Retry Counter wird in einem externen vertrauenswürdigen nicht-flüchtigen Speicher angeordnet, das kann zum Beispiel ein sicherer Webdienst oder eine SIM-Karte in einem verbundenen Gerät sein. Somit wird zum Beispiel eine PIN-Abfrage nur durchgeführt, wenn eine Zählergrenze des Retry Counters noch nicht erreicht ist. Somit ist es erfindungsgemäß besonders vorteilhaft, dass eine kostengünstige Implementierung eines zustandslosen Sicherheitselements ohne Sicherheitsnachteil bewerkstelligt werden kann.

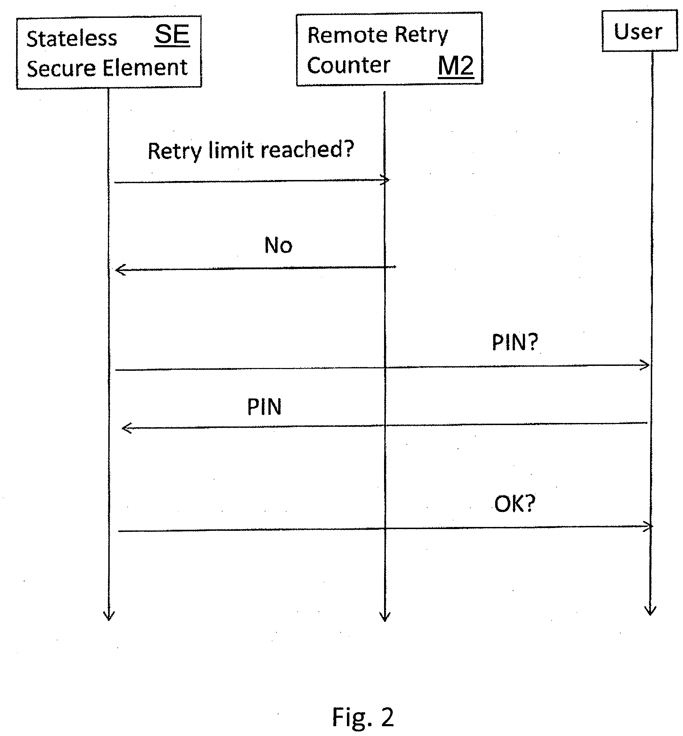

Figur 2 zeigt einen Ablaufhergang, indem auf der linken Seite das Sicherheitselement eingetragen ist, in der Mitte ein externer Datenspeicher und auf der rechten Seite ein Benutzer, welcher sich mittels eines PIN- oder Passwortverfahrens authentisieren möchte.

In dem Anwendungsszenario des erfindungsgemäßen Sicherheitselements wird in einem ersten Verfahrensschritt angefragt, ob ein Limit einer Wiederholungsgrenze erreicht ist. Ist beispielsweise vorgesehen, dass der Benutzer lediglich drei Mal seine PIN eingeben darf, bevor das Authentisierungsverfahren abgebrochen wird, und in dem ersten Verfahrensschritt bei dem externen Datenspeicher angefragt wird, wie der Zählerstand ist und hierauf der externe Datenspeicher erkennt, dass die PIN erst zwei Mal eingegeben wurde, so erfolgt in einem weiteren Verfahrensschritt die Rückgabe an das Sicherheitselement. Die Rückgabe beschreibt, dass das Limit noch nicht erreicht ist und somit ein Steuerbefehl in Abhängigkeit dieses Steuerparameters durch das Sicherheitselement ausgeführt werden kann. Dieser Steuerbefehl veranlasst, dass in einem darauffolgenden Verfahrensschritt nach der PIN bei dem Benutzer gefragt wird. Der Benutzer kann diese nunmehr eingeben, worauf in einem darauffolgenden Verfahrensschritt durch das Sicherheitselement die Richtigkeit der PIN verifiziert wird.

Wie sich aus der vorliegenden Figur ergibt, kommuniziert der Nutzer stets mit dem Sicherheitselement und nicht mit dem externen Datenspeicher, also dem Remote Retry Counter. Jedoch ist es möglich, dass ein sicheres Verfahren implementiert wird, da der Zählerstand nicht durch den Benutzer manipuliert werden kann. Ferner ist es besonders vorteilhaft, dass das Stateless Secure Element, also das Sicherheitselement, keinen schreibbaren Speicher aufweisen muss, da die Steuerparameter stets von dem Remote Retry Counter, also dem externen Datenspeicher, gespeichert werden.

## Patentansprüche

1. Zustandsloses Sicherheitselement (SE) zur PIN-Verifikation, mit:
- einem internen Datenspeicher (M1), der Steuerbefehle und Steuerparameter abspeichert;
- einer Kommunikationsschnittstelle eingerichtet zur Übermittlung von Steuerparametern an einen externen Datenspeicher (M2), **dadurch gekennzeichnet, dass** ein schreibender Zugriff auf Steuerparameter durch das Sicherheitselement (SE) ausschließlich mittels der Kommunikationsschnittstelle durchführbar ist.

2. Sicherheitselement (SE) nach Anspruch 1, **dadurch gekennzeichnet, dass** der interne Datenspeicher (M1) nur lesbar ist.

3. Sicherheitselement (SE) nach Anspruch 1 oder 2, **dadurch gekennzeichnet, dass** die Steuerbefehle einen Programmablauf definieren, dessen Parameter stets auf dem externen Datenspeicher (M2) abgespeichert werden.

4. Sicherheitselement (SE) nach einem der vorhergehenden Ansprüche, **dadurch gekennzeichnet, dass** mittels der Steuerparameter ein Wiederholungszähler einer Sicherheitsabfrage auf dem externen Datenspeicher (M2) gespeichert wird.

5. Sicherheitselement (SE) nach einem der vorhergehenden Ansprüche, **dadurch gekennzeichnet, dass** Steuerparameter, welche auf dem internen Datenspeicher (M1) gespeichert sind, statisch sind und Steuerparameter, welche auf dem externen Datenspeicher (M2) gespeichert sind, variabel sind.

6. Sicherheitselement (SE) nach einem der vorhergehenden Ansprüche, **dadurch gekennzeichnet, dass** der interne und/ oder der externe Datenspeicher (M1; M2) ein nicht-flüchtiger Datenspeicher ist.

7. Sicherheitselement (SE) nach einem der vorhergehenden Ansprüche, **dadurch gekennzeichnet, dass** abgespeicherte Steuerbefehle in Abhängigkeit mindestens eines Steuerparameters ausführbar sind.

8. Sicherheitselement (SE) nach einem der vorhergehenden Ansprüche, **dadurch gekennzeichnet, dass** das Sicherheitselement (SE) mittels einer Datenverbindung mit dem externen Datenspeicher (M2) kommuniziert.

9. Sicherheitselement (SE) nach einem der vorhergehenden Ansprüche, **dadurch gekennzeichnet, dass** der externe Datenspeicher (M2) als ein herkömmliches Sicherheitselement vorliegt.

10. Sicherheitselement (SE) nach einem der vorhergehenden Ansprüche, **dadurch gekennzeichnet, dass** das Sicherheitselement (SE) als eine SIM-Karte, eine Secure-SD-Karte, eine UICC und/ oder ein Hardware-Chip vorliegt.

11. Sicherheitselement (SE) nach einem der vorhergehenden Ansprüche, **dadurch gekennzeichnet, dass** auf dem internen Datenspeicher (M1) ein Protokoll zur Kommunikation mit dem externen Datenspeicher (M2) abgespeichert ist.

12. Sicherheitselement (SE) nach einem der vorhergehenden Ansprüche, **dadurch gekennzeichnet, dass** ausschließlich das zustandslose Sicherheitselement (SE) eingerichtet ist, Benutzereingaben entgegenzunehmen.

13. Verifikationsanordnung, mit:
- einem Sicherheitselement (SE), aufweisend einen internen Datenspeicher (M1), der Steuerbefehle und Steuerparameter abspeichert;
- einem dem Sicherheitselement (SE) extern angeordneten Datenspeicher (M2), auf dem Steuerparameter abgespeichert sind, wobei die Verifikationsanordnung, **dadurch gekennzeichnet ist, dass** ein schreibender Zugriff auf Steuerparameter durch das Sicherheitselement (SE) ausschließlich auf dem externen Datenspeicher (M2) durchführbar ist.

14. Verfahren zum Betreiben eines zustandslosen Sicherheitselements (SE) zur PIN-Verifikation, **dadurch gekennzeichnet, dass** ein schreibender Zugriff auf Steuerparameter durch das Sicherheitselement (SE) ausschließlich mittels einer Kommunikationsschnittstelle zu einem externen Datenspeicher (M2) durchgeführt wird.

15. Computerprogrammprodukt mit Steuerbefehlen, welche das Verfahren gemäß Anspruch 14 implementieren.
